# EUROPÄISCHE PATENTANMELDUNG

(11) **EP 3 660 730 A1**
(43) Veröffentlichungstag der Anmeldung: **03.06.2020**
(21) Anmeldenummer: 19020649.0
(22) Anmeldetag: 19.11.2019
(51) Int. Cl.: G06K 9/00

(54) **ENTFERNTES AUTHENTISIEREN EINES BENUTZERS**

(30) Priorität: 27.11.2018 DE 102018009301
(71) Anmelder: Giesecke+Devrient Mobile Security GmbH, 81677 München (DE)
(72) Erfinder: Herget, Werner, 81739 München (DE); Brandl, Denny, 85635 Höhenkirchen (DE)

(57) **Zusammenfassung**

Die vorliegende Erfindung ist auf ein Verfahren zum entfernten Authentisieren eines Benutzers mittels einer Videoschnittstelle gerichtet, welches es ermöglicht, dass ein Benutzer vollautomatisiert anhand eines Ausweisdokuments authentisiert wird, ohne dass hierbei ein Mitarbeiter eine Sprachanweisung bereitstellen muss. Darüber hinaus ist die vorliegende Erfindung auf eine entsprechend eingerichtete Systemanordnung gerichtet sowie auf ein Computerprogrammprodukt mit Steuerbefehlen, welche das Verfahren implementieren bzw. das vorgeschlagene System betreiben.

## Beschreibung

Die vorliegende Erfindung ist auf ein Verfahren zum entfernten Authentisieren eines Benutzers mittels einer Videoschnittstelle gerichtet, welches es ermöglicht, dass ein Benutzer vollautomatisiert anhand eines Ausweisdokuments authentisiert wird, ohne dass hierbei ein Mitarbeiter eine Sprachanweisung bereitstellen muss. Darüber hinaus ist die vorliegende Erfindung auf eine entsprechend eingerichtete Systemanordnung gerichtet sowie auf ein Computerprogrammprodukt mit Steuerbefehlen, welche das Verfahren implementieren bzw. das vorgeschlagene System betreiben.

WO 2018/095 564 A1 zeigt ein Verfahren zum sicheren Authentisieren eines Terminals, wobei eine Bildverarbeitungseinheit zum Einsatz kommt.

DE 10 2017 001 879 A1 zeigt ein Verfahren zum kontrollierten Verifizieren der Identität eines Nutzers unter Verwendung eines Identitätsdokuments.

DE 10 2015 208 098 A1 zeigt ein Verfahren zur Erzeugung einer elektronischen Signatur eines Nutzers für ein elektronisches Dokument.

GB 2501362 A zeigt ein Authentisieren eines Benutzers über eine Online-Schnittstelle, wobei eine vorbestimmte Beleuchtung zum Einsatz kommt.

Aus dem Stand der Technik ist das sogenannte Videoldent-Verfahren bekannt, bei dem sich ein Benutzer über eine Online-Schnittstelle anhand seines Ausweises verifiziert. Hierdurch soll dem Benutzer erspart werden, dass er eine Bankfiliale aufsuchen muss, und kann somit beispielsweise eine Kontoeröffnung von zu Hause aus beantragen. Hierzu ist es bekannt, dass der Benutzer ein Ausweisdokument in eine Kamera, vorzugsweise eine Webcam, hält und sodann das entsprechende Bild an einen Mitarbeiter des Bankinstituts übertragen wird. Der Mitarbeiter gibt hierbei Anweisungen an den Benutzer, wie er sein Dokument ausrichten muss, und sodann entscheidet der Mitarbeiter manuell, ob der Benutzer tatsächlich mittels seines Ausweisdokumentes verifizierbar ist. Generell besteht jedoch eine erhebliche Fehlerquelle darin, dass der Benutzer oftmals nicht anhand des übertragenen Bildes sicher feststellen kann, ob das Ausweisdokument echt ist. So gibt es Fälschungsversuche, die beispielsweise vorsehen, dass ein Bild des Ausweisdokumentinhabers aufgeklebt wird. Da ansonsten ein valides Ausweisdokument vorgehalten wird, fällt dies nicht auf und der Benutzer wird fälschlicherweise verifiziert.

Die im Stand der Technik vorgeschlagenen Verfahren sind typischerweise sehr aufwändig und darüber hinaus muss stets ein Mitarbeiter den Authentisierungsvorgang begleiten. Der Mitarbeiter überprüft das Ausweisdokument nach eigenem Ermessen und kann oftmals nicht alle Sicherheitsmerkmale identifizieren. Oftmals ist es für einen menschlichen Benutzer nicht erkennbar, ob das Ausweisdokument ein echtes Abbild des Benutzers trägt oder ob lediglich ein Abbild aufgeklebt wurde. Ferner mangelt es solchen Verfahren oftmals an der Akzeptanz, da für den Bankkunden der Vorgang aufwändig erscheint und dieser zudem an Öffnungszeiten eines entsprechenden Servicecenters gebunden ist. Möchte der Kunde beispielsweise in der Nacht eine Verifikation vornehmen, so wird er keinen Mitarbeiter vorfinden und muss die Überprüfung an einem anderen Zeitpunkt durchführen.

Weitere bekannte Verfahren sehen vor, dass eine spezialisierte Elektronik vorgehalten werden muss, die der Überprüfung von Ausweisdokumenten dient. So ist es bekannt, dass ein Benutzer an seinem persönlichen Computer ein Kartenlesegerät installiert, in welches ein Ausweisdokument eingeschoben wird. Solche Kartenlesegeräte stellen jedoch einen großen Aufwand dar, da diese übersendet werden müssen, installiert werden müssen und zudem gewartet werden müssen. Auch bei einem solchen Verfahren mangelt es an der Akzeptanz, da dies mit einem erhöhten Aufwand auf Seiten des Kunden als auch auf Seiten des Kreditinstituts verbunden ist.

Es besteht somit ein Bedarf an einem Verfahren, das die Anleitung des zu authentisierenden Benutzers durch eine Person im Callcenter vereinfacht bzw. ein entsprechender Mitarbeiter überhaupt nicht mehr notwendig ist. Es soll ein Verfahren entwickelt werden, mit dem Sicherheitsmerkmale auf einer Ausweiskarte ohne zusätzliche elektronische Komponenten erkannt und verifiziert werden können. Es soll also insgesamt ein Verfahren vorgeschlagen werden, mit dem die bestehenden Verfahren zur Identifizierung eines Gesichts genutzt werden, um den Vergleich und die Identifizierung eines Fotos auf einer Ausweiskarte mit dem Gesicht des Benutzers aus dem aktuellen Videostream und optional bzw. zusätzlich einer externen Datenbank durchzuführen.

Somit ist es eine Aufgabe der vorliegenden Erfindung, ein verbessertes Verfahren bereitzustellen, welches eine entfernte Authentisierung mit geringem technischen Aufwand und vollautomatisiert durchführt. Darüber hinaus ist es eine Aufgabe der vorliegenden Erfindung, eine entsprechend eingerichtete Systemanordnung bzw. ein Authentisierungssystem vorzuschlagen mitsamt einem Computerprogramm mit Steuerbefehlen, welche das vorgeschlagene Verfahren implementieren bzw. das System betreiben.

Die Aufgabe wird gelöst mit den Merkmalen der unabhängigen Patentansprüche. Weitere vorteilhafte Ausgestaltungen sind in den Unteransprüchen angegeben.

Demgemäß wird ein Verfahren zum entfernten Authentisieren eines Benutzers mittels einer Videoschnittstelle vorgeschlagen, aufweisend ein Bereitstellen mindestens einer Positionierungsanweisung eines Identifikationsdokuments vor einer Kamera an einen Benutzer mittels eines bewegten Bildes, wobei eine Soll-Position und eine Ist-Position des Identifikationsdokuments auf einer Wiedergabevorrichtung angezeigt werden, ein Bereitstellen mindestens einer Bewegungsanweisung des Identifikationsdokuments vor der Kamera und ein Erfassen vordefinierter Sicherheitsmerkmale des Identifikationsdokuments in Abhängigkeit der mindestens einen Bewegungsanweisung, wenn die Soll-Position und die Ist-Position des Identifikationsdokuments im Wesentlichen übereinstimmt.

Erfindungsgemäß erfolgt ein entferntes Authentisieren eines Benutzers, wozu beispielsweise ein herkömmlicher Personal Computer oder ein Tablet Verwendung finden kann. Typischerweise sind solche Geräte derart ausgestaltet, dass diese eine Kamera aufweisen und eine Wiedergabevorrichtung. Ist in dem Endgerät selbst keine Kamera verbaut, so kann diese nachgerüstet werden. Die Wiedergabevorrichtung liegt typischerweise als ein Display bzw. ein Bildschirm vor. Gemäß des vorgeschlagenen Verfahrens ist es also möglich, dass ein Benutzer sich beispielsweise bei einem Kreditinstitut authentisiert, indem er sein Mobiltelefon oder ein Tablet-Computer verwendet. Das Endgerät benötigt ferner eine Kommunikationsschnittstelle, mit der es mit einem Server der Authentisierungsstelle kommuniziert. Die Systemanordnung impliziert somit eine Videoschnittstelle, anhand derer die Daten ausgetauscht werden.

Hierzu ist es vorgesehen, dass ein Bereitstellen mindestens einer Positionierungsanweisung eines Identifikationsdokuments erfolgt. Der Benutzer soll also sein Identifikationsdokument in die Kamera halten, und zwar an einer vorbestimmten Position. Somit kann in dem Display ein Rechteck eingezeichnet werden, wobei das Display das Kamerabild wiedergibt. Der Benutzer hält also sein Identifikationsdokument vor und bewegt es derart vor der Kamera, dass das wiedergegebene Bild der Kamera das Identifikationsdokument anzeigt und ferner anzeigt, wo das Identifikationsdokument hinbewegt werden soll. Als weitere Hilfe kann dem Benutzer der Umriss des Identifikationsdokuments in dem Display angezeigt werden und zudem ein Umriss der Soll-Position des Identifikationsdokuments. Sodann bringt der Benutzer beide Positionen in Deckung, so dass sich das Identifikationsdokument an einer geeigneten Position vor der Kamera befindet.

Das bewegte Bild zeigt vorzugsweise das Bild der Kamera, wobei dem Benutzer weitere Hilfsinformationen eingeblendet werden. Dies bezieht sich sowohl auf die Positionierungsanweisung als auch auf die Bewegungsanweisung. Mittels der Positionierungsanweisung soll sichergestellt werden, dass sich das Identifikationsdokument so vor der Kamera befindet, dass in geeigneter Weise die optischen Sicherheitsmerkmale ausgelesen werden können.

Die Bewegungsanweisungen sehen darüber hinaus vor, dass das Identifikationsdokument in einer festgelegten Art und Weise bewegt wird, dass unterschiedliche Sicherheitsmerkmale zu erkennen sind bzw. optische Effekte hervortreten, welche die Sicherheitsmerkmale ausmachen. So soll das Identifikationsdokument stets gemäß der Positionierungsanweisung an geeigneter Stelle gehalten werden und darüber hinaus an geeigneter Stelle derart bewegt werden, dass die Echtheit des Identifikationsdokuments überprüft werden kann. Die einzelnen Aktionen, die der Benutzer ausführen soll, werden also innerhalb der Soll-Position ausgeführt, wobei das Identifikationsdokument gedreht, gekippt, gebogen oder in irgendeiner Weise in seiner Position derart variiert wird, dass die Sicherheitsmerkmale überprüfbar sind.

Bei dem Identifikationsdokument kann es sich um einen Personalausweis oder einen Passport handeln, was vorliegend jedoch nicht einschränkend zu verstehen ist. Vielmehr sind alle Identifikationsdokumente geeignet, welche ein Kreditinstitut oder allgemein eine Authentisierungsstelle zulässt. Folglich kann es sich bei dem Identifikationsdokument auch um eine Kreditkarte handeln. Als Sicherheitsmerkmale kommen alle optischen Sicherheitsmerkmale in Betracht. Vorzugsweise enthält das Identifikationsdokument ein Abbild des berechtigten Benutzers, derart, dass das Verfahren automatisiert ein Pattern Matching durchführen kann und somit erkannt wird, ob der rechtmäßige Benutzer sein Identifikationsdokument vorhält. Das vorliegende Verfahren ist jedoch nicht auf Abbilder beschränkt, sondern vielmehr sind weitere optische Sicherheitsmerkmale möglich.

Die Sicherheitsmerkmale sind generell optische Merkmale, die gemäß der Bewegungsanweisung in Erscheinung treten. So weisen Identifikationsdokumente typischerweise einen Kippeffekt auf, der vorsieht, dass ein optischer Effekt in einer ersten Position ein anderer ist wie ein optischer Effekt in einer zweiten Position. Das Identifikationsdokument wird also um eine Achse gekippt und zeigt ein unterschiedliches optisches Verhalten. Darüber hinaus kann als Sicherheitsmerkmal ein Muster gelten, welches unter einem bestimmten Einfallswinkel von Licht erkennbar wird. Darüber hinaus kann ein Identifikationsdokument einen optischen Effekt hervorrufen, falls es in einer vorbestimmten Weise gebogen wird. Alle optischen Effekte werden systematisch anhand der Bewegungsanweisung abgeprüft.

Soll also ein Kippeffekt überprüft werden, so wird der Benutzer mittels der Bewegungsanweisung angewiesen, das Identifikationsdokument innerhalb der Soll-Position zu kippen. Soll ein bestimmtes Reflexionsmuster abgeprüft werden, so wird der Benutzer mittels der Bewegungsanweisung aufgefordert, das Identifikationsdokument in einem bestimmten Winkel zur Kamera zu halten, derart, dass die gewünschte Reflexion eintritt. All diese Bewegungen beziehen sich auf das Identifikationsdokument, welches stets in der Soll-Position verbleibt. So sehen die Bewegungsanweisungen vor, dass der Benutzer nicht das Identifikationsdokument aus der Soll-Position führen muss. Vielmehr verbleibt das Identifikationsdokument in der Soll-Position und wird lediglich bezüglich dessen Neigung bzw. Biegung variiert.

In Abhängigkeit der Bewegungsanweisung erfolgt sodann ein Erfassen vordefinierter Sicherheitsmerkmale des Identifikationsdokuments. Wird beispielsweise ein Kippeffekt abgeprüft, so wird seitens des vorgeschlagenen Verfahrens in einem nachfolgenden Schritt davon ausgegangen, dass nunmehr das Identifikationsdokument einen wechselnden optischen Effekt hervorruft. Tritt dieser Effekt allerdings nicht auf, so wird davon ausgegangen, dass entweder das Sicherheitsmerkmal nicht vorhanden ist oder aber der Benutzer den Bewegungsanweisungen nicht gefolgt ist. In beiden Fällen kann definiert werden, wie oft der Benutzer wiederholen soll und die Bewegungsanweisung ausführen soll, bis der Vorgang abgebrochen wird. Werden alle zu überprüfenden Sicherheitsmerkmale erkannt, so wird der Benutzer positiv authentifiziert, und bei einem wiederholten Fehlschlagen eines Erfassens vordefinierter Sicherheitsmerkmale wird der Vorgang abgebrochen und der Benutzer negativ authentisiert. In diesem Fall bricht das Verfahren ab und der Vorgang ist insgesamt fehlgeschlagen. Für ein positives Authentisieren ist es erforderlich, dass alle Sicherheitsmerkmale erfasst werden, und andernfalls wird der Benutzer nicht freigeschaltet. Eine anschließende Fehlerroutine kann vorsehen, dass der Benutzer benachrichtigt wird und optional das Authentisierungssystem ebenfalls derart benachrichtigt wird, dass nach eigenem Ermessen der Benutzer gesperrt wird.

Bei dem Erfassen der vordefinierten Sicherheitsmerkmale verlässt das Identifikationsdokument nicht die Soll-Position und somit stimmen stets die Soll-Position und die Ist-Position überein. Dies stellt sicher, dass stets das Identifikationsdokument an geeigneter Stelle vorgehalten wird und ein optimales optisches Überprüfen der Sicherheitsmerkmale erfolgen kann. Verlässt allerdings das Identifikationsdokument die Soll-Position und weicht folglich die Ist-Position ab, so wird der Benutzer entweder aufgefordert, sein Identifikationsdokument wieder in die gewünschte Position zu versetzen, oder der Vorgang wird abgebrochen. Um zu verhindern, dass der Benutzer unterschiedliche Identifikationsdokumente vorhält, ist es vorteilhaft, den Vorgang abzubrechen, falls die Soll-Position verlassen wird. Dies stellt sicher, dass während des gesamten Vorgangs stets nur ein Identifikationsdokument vorgehalten wird. Ansonsten könnte der Benutzer bei einer Abfrage unterschiedlicher Sicherheitsmerkmale unterschiedliche Identifikationsdokumente vorhalten, die jeweils gesondert dieses Sicherheitsmerkmal aufweisen.

Gemäß einem Aspekt der vorliegenden Erfindung wird ein gespiegeltes Bild, welches durch die Kamera aufgenommen wird, auf der Wiedergabevorrichtung angezeigt. Dies hat den Vorteil, dass der Benutzer sich stets selbst sehen kann und zudem sehen kann, in welcher Ist-Position das Identifikationsdokument gerade ausgerichtet ist. Somit wird es dem Benutzer erleichtert, die Ist-Position des Identifikationsdokuments in die Soll-Position überzuführen und diese auch beizubehalten.

Gemäß einem weiteren Aspekt der vorliegenden Erfindung werden die Soll-Position und die Ist-Position als Rechtecke auf der Wiedergabevorrichtung angezeigt. Dies hat den Vorteil, dass das Identifikationsdokument abstrahiert werden kann und dem Benutzer die Umrisse angezeigt werden können, welche in Deckung gebracht werden sollen. Typischerweise liegt das Identifikationsdokument in rechteckiger Form vor, so dass lediglich zwei Rechtecke eingeblendet werden sollen, die zur Deckung gebracht werden sollen.

Gemäß einem weiteren Aspekt der vorliegenden Erfindung werden die Soll-Position und die Ist-Position anhand von unterschiedlicher graphischer Information angezeigt. Dies hat den Vorteil, dass für die Soll-Position des Identifikationsdokuments eine unterschiedliche graphische Information verwendet werden kann wie für die Ist-Position des Identifikationsdokuments. Die graphische Information kann derart unterschiedlich ausgestaltet werden, dass beispielsweise die Ist-Position als herkömmliches Rechteck angezeigt wird und die Soll-Position beispielsweise als Rechteck mit abgerundeten Kanten. Ein weiteres Beispiel für eine solche unterschiedliche graphische Information ist das Verwenden unterschiedlicher Linienstärken bzw. das Verwenden einer gestrichelten oder durchgängigen Linie.

Gemäß einem weiteren Aspekt der vorliegenden Erfindung werden die Soll-Position und die Ist-Position in unterschiedlichen Farben angezeigt. Dies hat den Vorteil, dass es seitens des Benutzers zu keiner Verwechslung kommen kann und somit ein deutlicher Hinweis darauf gegeben wird, wie das Identifikationsdokument ausgerichtet werden soll. Darüber hinaus wird die Positionierung vereinfacht, falls sich das Identifikationsdokument bereits nahe an der Soll-Position befindet. Somit werden beide Informationen derart unterschiedlich angezeigt, dass diese nicht ineinander übergehen und stets eine Unterscheidung beider Positionen möglich ist.

Gemäß einem weiteren Aspekt der vorliegenden Erfindung wird auf der Wiedergabevorrichtung ein Muster als Bewegungsanweisung angezeigt, welches einer Soll-Spiegelung des Identifikationsdokuments entspricht. Dies hat den Vorteil, dass auch Reflexionen herbeigeführt werden können, derart, dass das gewünschte Reflexionsbild des Identifikationsdokuments vorgegeben wird, und der Benutzer soll dann das Identifikationsdokument derart ausrichten, dass sich tatsächlich die gewünschte Reflexion einstellt. Dies wird dem Benutzer nur dann gelingen, falls auch tatsächlich dieses Sicherheitsmerkmal ordnungsgemäß vorhanden ist.

Gemäß einem weiteren Aspekt der vorliegenden Erfindung ist auf der Wiedergabevorrichtung eine Bewegungsanweisung in Form einer Linie angezeigt, um die das Identifikationsdokument zu drehen ist. Dies hat den Vorteil, dass auch ein Kippeffekt erzeugt werden kann, und es kann die Kippachse genau vorgegeben werden. Somit kann mittels der Kamera überprüft werden, ob sich der Kippeffekt genauso entwickelt, wie es in einem ordnungsgemäßen Sicherheitsmerkmal vorgegeben ist. Insbesondere können folglich nicht lediglich die Anfangsposition und die Endposition verglichen werden, sondern vielmehr kann bei einem Kippen das Identifikationsdokument beobachtet werden und alle Zwischenwinkel können abgeprüft werden.

Gemäß einem weiteren Aspekt der vorliegenden Erfindung wird auf der Wiedergabevorrichtung eine Bewegungsanweisung in Form eines Textes, eines bewegten Bildes, eines Symbols und/oder einer Handlungsanweisung angezeigt. Dies hat den Vorteil, dass dem Benutzer weitere hilfreiche Information gegeben werden kann und er zudem erfährt, was bei der Bewegung des Identifikationsdokuments zu beachten ist.

Gemäß einem weiteren Aspekt der vorliegenden Erfindung nimmt die mindestens eine Bewegungsanweisung lediglich einen Teil der Wiedergabevorrichtung ein. Dies hat den Vorteil, dass weitere Informationen in dem Display angezeigt werden können, wie beispielsweise ein Bild des Benutzers. So sind generell die vorgeschlagenen Informationen sichtbar, wobei jedoch stets ein freies Feld zur Verfügung bleibt, in dem sich der Benutzer selbst beobachten kann.

Gemäß einem weiteren Aspekt der vorliegenden Erfindung wird die mindestens eine Bewegungsanweisung kontinuierlich oder wiederholt angezeigt. Dies hat den Vorteil, dass die Bewegungsanweisung ausgeblendet werden kann und wieder eingeblendet werden kann, so dass auch Störungen vermieden werden, oder aber die Bewegungsanweisungen werden derart kontinuierlich angezeigt, dass diese stets vorhanden sind. Darüber hinaus können die unterschiedlichen Sicherheitsmerkmale abwechselnd angezeigt werden, so dass Störungen beispielsweise in der Reflexion vermieden werden. Generell ist es auch möglich, alle Handlungsanweisungen gleichzeitig einzublenden.

Gemäß einem weiteren Aspekt der vorliegenden Erfindung sieht die mindestens eine Bewegungsanweisung ein Kippen, ein Drehen, ein Biegen und/oder ein Verformen des Identifikationsdokuments vor. Dies hat den Vorteil, dass alle möglichen optischen Effekte des Identifikationsdokuments abgeprüft werden können. So kann der beschriebene Kippeffekt abgeprüft werden und es kann zudem beispielsweise auch abgeprüft werden, ob optische Muster vorhanden sind, die sich in einem Durchlicht ergänzen. Darüber hinaus können Hologramme und dergleichen abgeprüft werden.

Gemäß einem weiteren Aspekt der vorliegenden Erfindung wird das Verfahren derart iterativ durchgeführt, dass mehrere Sicherheitsmerkmale des Identifikationsdokuments erfasst werden. Dies hat den Vorteil, dass nacheinander alle Sicherheitsmerkmale abgeprüft werden können, wobei es auch möglich ist, in einem einzelnen Verfahrensschritt alle Sicherheitsmerkmale abzuprüfen. Generell kann es jedoch vorkommen, dass unterschiedliche Sicherheitsmerkmale eine unterschiedliche Bewegung des Identifikationsdokuments benötigen, und somit werden diese unterschiedlichen Sicherheitsmerkmale sodann eben auch nacheinander abgeprüft. Generell ist es vorteilhaft, dass in einem Verfahrensschritt so viele Sicherheitsmerkmale wie möglich abgeprüft werden.

Gemäß einem weiteren Aspekt der vorliegenden Erfindung terminiert bei einem wiederholten Fehlschlagen des Erfassens vordefinierter Sicherheitsmerkmale das Verfahren. Dies hat den Vorteil, dass ein Missbrauch erkannt werden kann, und somit wird davon ausgegangen, dass ab einer gewissen Anzahl an Fehlversuchen kein echtes Identifikationsdokument vorliegt. Generell ist zu berücksichtigen, dass es aufgrund von optischen Störungen auch dazu kommen kann, dass das Erfassen fehlschlägt, ohne dass hierbei ein Manipulationsversuch vorliegt. Insofern kann eine Anzahl an Wiederholungen vordefiniert werden, die nicht überschritten wird. Somit ist es möglich, dass dem Benutzer einige Versuche gegeben werden, sich zu authentisieren, und wird diese Anzahl überschritten, wird das Verfahren abgebrochen und der Benutzer wird nicht authentisiert bzw. negativ authentisiert.

Die Aufgabe wird auch gelöst durch ein Authentifizierungssystem zum entfernten Authentisieren eines Benutzers mittels einer Videoschnittstelle, aufweisend eine Wiedergabevorrichtung eingerichtet zum Bereitstellen mindestens einer Positionierungsanweisung eines Identifikationsdokuments vor einer Kamera an einem Benutzer mittels eines bewegten Bildes, wobei eine Soll-Position und eine Ist-Position des Identifikationsdokuments auf der Wiedergabevorrichtung angezeigt werden, eine Schnittstelleneinheit eingerichtet zum Bereitstellen mindestens einer Bewegungsanweisung des Identifikationsdokuments vor der Kamera, und eine Bildverarbeitungseinheit eingerichtet zum Erfassen vordefinierter Sicherheitsmerkmale des Identifikationsdokuments in Abhängigkeit der mindestens einen Bewegungsanweisung, wenn die Soll-Position und die Ist-Position des Identifikationsdokuments im Wesentlichen übereinstimmen.

Generell erkennt der Fachmann, dass das Merkmal "im Wesentlichen übereinstimmen" derart verstanden werden soll, dass die Soll- und die Ist-Position übereinstimmen, wobei kleinere Abweichungen toleriert werden. Folglich ist das Merkmal "im Wesentlichen" optional. Bevorzugt ist es, dass die Soll-Position und die Ist-Position übereinstimmen. Da dies lediglich in der Praxis oftmals schwierig ist, wird auch ein Übereinstimmen im Wesentlichen toleriert.

Die Aufgabe wird auch gelöst durch ein Computerprogrammprodukt mit Steuerbefehlen, welche das vorgeschlagene Verfahren ausführen bzw. die vorgeschlagene Authentifizierungsanordnung bzw. das Authentifizierungssystem betreiben.

Erfindungsgemäß ist es besonders vorteilhaft, dass das Verfahren Verfahrensschritte aufweist, welche der Funktionalität der strukturellen Merkmale der Authentifizierungsanordnung bzw. des Authentifizierungssystems entsprechen. Das Authentifizierungssystem weist strukturelle Merkmale auf, welche die Funktionen der einzelnen Verfahrensschritte übernehmen. Somit ist das Verfahren geeignet, das Authentifizierungssystem zu betreiben bzw. das Authentifizierungssystem ist geeignet, die vorgeschlagene Methode bzw. das Verfahren auszuführen.

Weitere vorteilhafte Ausgestaltungen werden anhand der beigefügten Figuren näher erläutert. Es zeigen:
- Fig.1:: eine schematische Bewegungsanweisung des Identifikationsdokuments gemäß einem Aspekt der vorliegenden Erfindung;
- Fig. 2:: ein bewegtes Bild mit einem Abbild eines Benutzers und dem Identifikationsdokument;
- Fig. 3:: das Identifikationsdokument, welches in eine Soll-Position gebracht wird;
- Fig. 4:: ein bewegtes Bild des Benutzers, der das Identifikationsdokument in die Soll-Position verbringt;
- Fig. 5:: die Kamera mitsamt der Wiedergabevorrichtung und dem Identifikationsdokument gemäß einem weiteren Aspekt der vorliegenden Erfindung; und
- Fig. 6:: ein schematisches Ablaufdiagramm des vorgeschlagenen Verfahrens zum entfernten Authentisieren eines Benutzers.

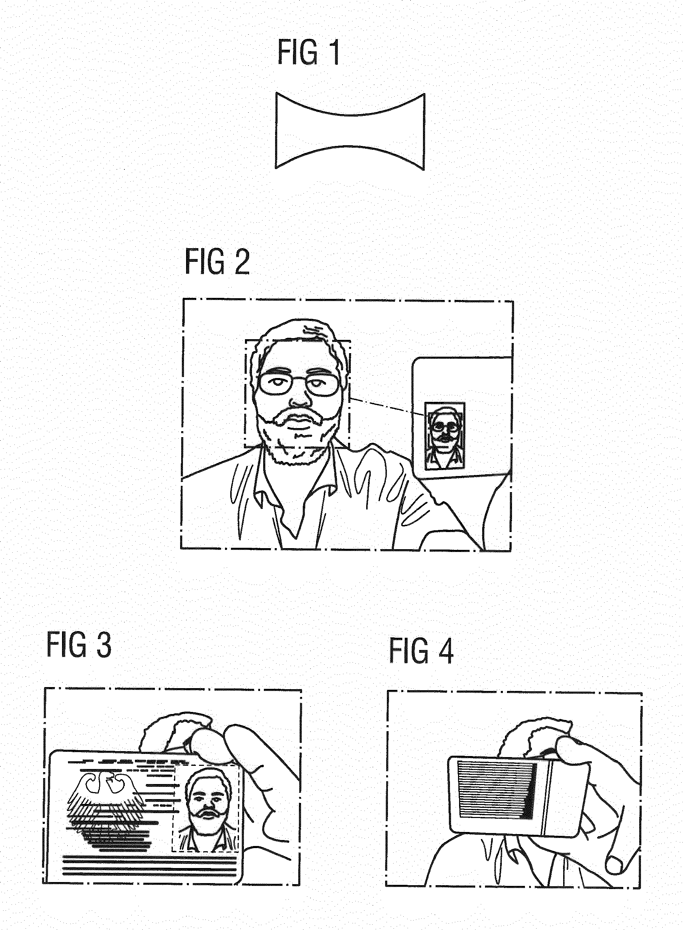

Fig.1 zeigt eine Bewegungsanweisung an den Benutzer, welche vorgibt, dass er das Wertdokument biegen soll. Hierdurch ergibt sich die gezeigte geometrische Form und es entsteht ein bestimmter optischer Effekt, der abgeprüft werden kann. Dies ist bei flexiblen bzw. biegbaren Ausweisen möglich. Der Antragsteller wird dazu aufgefordert, die Ausweiskarte zu biegen, bis die Ausweiskarte in die dargestellte Form passt, und so zu kippen, dass die Reflexion des Musters den gesamten Ausweis überstreicht. Durch die Biegung wird ein stärkerer Winkel der Beleuchtung erreicht. Dadurch wird z. B. eine Erkennung der Kanten von aufgeklebten Fotos ermöglicht. Die Biegung kann sowohl konvex als auch konkav sein.

Fig. 2 zeigt den Benutzer, welcher von dem vorgeschlagenen Verfahren erkannt wird, und zeigt zumindest einen Teil des Identifikationsdokuments, welches in einer Ist-Position angeordnet ist. Mittels eines Pattern Matching kann das Bild des Benutzers mit dem Abbild auf dem Identifikationsdokument verglichen werden, und sodann kann festgestellt werden, ob ein berechtigter Benutzer vorliegt.

Fig. 3 zeigt das Identifikationsdokument, welches nunmehr von einer Ist-Position, die ursprünglich vorgeherrscht hat, in eine Soll-Position überführt wurde. Hier ist deutlich zu erkennen, dass das Identifikationsdokument nunmehr derart vorgehalten wird, dass die Kamera die Sicherheitsmerkmale abprüfen kann.

Fig. 4 zeigt einen weitere Stellung des Identifikationsdokuments, welches nunmehr von der Rückseite begutachtet werden kann. So ist beispielsweise auf EU-Führerscheinen oftmals ein Sicherheitsmerkmal in Form eines Sicherheitsfadens eingebracht, der in Abhängigkeit eines einfallenden Lichtes reflektiert. Folglich verbleibt das Identifikationsdokument in der Soll-Position, und die Bewegungsanweisung sieht vor, dass das Identifikationsdokument gedreht wird.

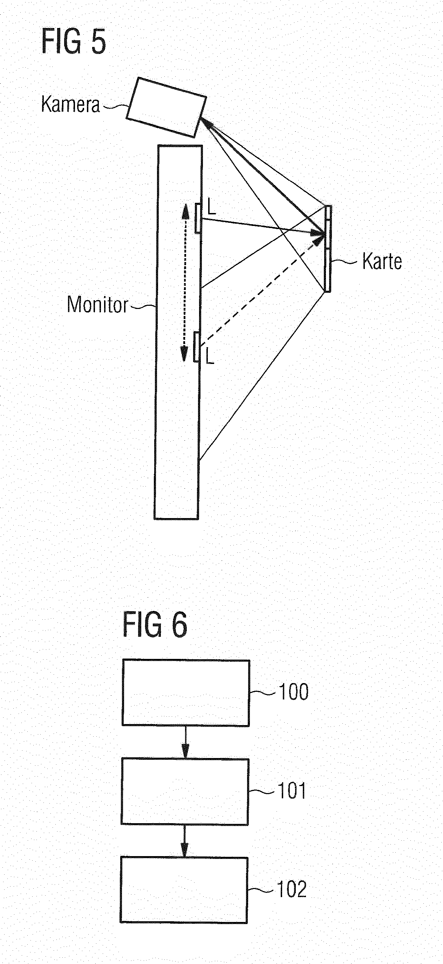

Fig. 5 zeigt die vorgeschlagene Anordnung des Authentifizierungssystems, bei dem oben eine Kamera angeordnet ist und darunter ein Monitor als Wiedergabevorrichtung. Davor wird in einem geeigneten Winkel die Karte vorgehalten. Zudem wird dem Benutzer mitgeteilt, wie er die Karte kippen soll, damit ein bestimmtes Sicherheitsmerkmal zum Vorschein tritt und abgeprüft werden kann. Im Weiteren wird anhand der gezeigten Anordnung ein Beispiel aufgezeigt, welches lediglich beispielhaft zu verstehen ist und unterschiedliche Aspekte aufzeigt, welche einzeln oder in ihrer Gesamtheit vorherrschen können. Insbesondere sind einzelne Aspekte in Kombination vorteilhaft.

Folgende Elemente werden gemäß einem Aspekt der Erfindung auf dem Bildschirm unterhalb der Kamera (dies kann ein PC-Monitor, Notebook oder "Self-Kamera" des Smartphones sein) während des Ablaufs angezeigt:
1. Das vertikal gespiegelte Bild der Kamera vor die die Ausweiskarte gehalten wird (Merkmal B)
2. den dynamisch erkannten Umriss der Ausweiskarte aus dem Videostream (Merkmal U)
3. den dynamisch errechneten oder vordefinierten Ziel-Umriss der Ausweiskarte (Merkmal Z)
4. ein Muster (auch animiert) zur Spiegelung der Ausweiskarte (Merkmal M)
5. eine bewegte Linie für unterschiedliche Beleuchtungswinkel (Merkmal L)
6. zusätzliche Informationen (Text, Video, Symbole, etc, auch animiert) zur Hilfestellung und Führung des Benutzers (Merkmal I)

(Merkmal B) dient zur Rückmeldung an den Benutzer. In (Merkmal B) werden die Elemente (Merkmal U) und (Merkmal Z) angezeigt. (Merkmal B) wird gespiegelt dargestellt um die gleiche Bewegungsrichtung des Ausweises vor der Kamera in der Darstellung anzuzeigen. (Merkmal B) deckt nur einen Teilbereich des Monitors ab.

(Merkmal M) und (Merkmal L) nutzen den gesamten Monitor. Merkmal I) wird an einer Stelle dargestellt, die (Merkmal M) und (Merkmal L) nicht stören oder in (Merkmal B) dargestellt (z.B. animierte Pfeile).

(Merkmal B), (Merkmal U), (Merkmal Z), (Merkmal M) und (Merkmal I) werden zeitgleich und im Wechsel mit (Merkmal L) dargestellt. Dieser Wechsel kann sowohl schnell unter Nutzung einzelner Bilder des Videostreams (z.B. 20ms bei 50 Frames pro Sekunde) als auch in größeren Zeitintervallen erfolgen.

Der Wechsel zwischen (Merkmal B), (Merkmal U), (Merkmal Z), (Merkmal M) und (Merkmal I) einerseits und (Merkmal L) andererseits dient dazu Störungen in der Reflexion zu vermeiden. Eine Variante stellt die gleichzeitige Darstellung aller Elemente dar. Dies erfordert aber die Möglichkeit die Elemente (Merkmal B), (Merkmal U), (Merkmal Z), (Merkmal M) und (Merkmal I) aus dem Videostream herauszurechnen um nur die Reflexion von (Merkmal L) auswerten zu können. Dies kann z.B. durch unterschiedliche Farben erfolgen.

Eine weitere Variante ist die dynamische Ausblendung von (Merkmal B), (Merkmal U), (Merkmal Z), (Merkmal M) und (Merkmal I) in der Darstellung im Spiegelbereich von (Merkmal L). Dies wird erreicht durch dynamische Erkennung der Position von (Merkmal L) in der Spiegelung.

(Merkmal B), (Merkmal U), (Merkmal Z), die Reflexion von (Merkmal M) und (Merkmal I) wird der Benutzer so geführt, dass die Ausweiskarte korrekt positioniert und gekippt wird. Weitere Hilfestellung kann im nicht voll automatisierten Fall durch die Person im Callcenter per Audio gegeben werden.

(Merkmal U) und (Merkmal Z) werden für den Benutzer unterscheidbar dargestellt. Z.B. (Merkmal U) in Blau und (Merkmal Z) in Grün. Die Darstellung kann an weitere Anforderungen angepasst werden und/oder durch andere Linientypen (Dicke, gestrichelt, etc.) dargestellt werden um Menschen mit Farbsehschwächen die Nutzung zu ermöglichen.

Durch die Bewegung von (Merkmal L) werden unterschiedliche Beleuchtungswinkel aus der Blickrichtung der Kamera erzeugt, die die Erkennung und Veränderung von Sicherheitsmerkmalen ohne Bewegung der Ausweiskarte ermöglichen. Hierbei ist zu beachten, dass der Reflexionswinkel der Sicherheitsmerkmale nicht identisch mit der Spiegelung von (Merkmal L) sein muss.

Die Bewegung von (Merkmal L) über den gesamten oder gewünschten Spiegelbereich der Ausweiskarte benötigt eine kurze Zeit. Der zu authentisierende Benutzer wird deshalb aufgefordert die Ausweiskarte während des Vorgangs langsam und nicht hastig zu bewegen. Der Zeitraum der Bewegung der Linie über den Monitor sollte möglichst kurz sein, so dass die Ausweiskarte in dieser Zeitspanne nicht oder kaum bewegt wird. Durch Aufteilung des Bereichs der Ausweiskarte in kleinere Segmente kann die Zeit optimiert werden. Dies ist möglich, da die Position der Sicherheitselemente auf der Ausweiskarte bekannt ist. Eine schnellere Bewegung bedeutet eine kürzere und damit bequemere Präsentation der Ausweiskarte für den Benutzer.

Die Richtung der Bewegung der Linie kann unterschiedlich gewählt werden z.B. auf/ab oder links/rechts oder von einem Punkt kreisförmig oder ellipsenförmig nach außen und umgekehrt. Die Geschwindigkeit und Form der Linie kann entsprechend den Anforderungen und Rahmenbedingungen angepasst werden (Geschwindigkeit der Verbindung, Videoauflösung, Größe der Ausweiskarte etc.).

Die meisten Webcams erfassen auch Licht außerhalb des sichtbaren Bereiches, sodass auch solche Sicherheitselemente berücksichtigt werden können.

Generell kann das vorgeschlagene Verfahren in einen Positioniermodus und einen Erkennungsmodus unterteilt werden. Der Positioniermodus entspricht hierbei dem Überführen der aktuellen Ist-Position des Identifikationsdokuments in die Soll-Position. In dem Erkennungsmodus werden entsprechende Sicherheitsmerkmale abgeprüft. Positioniermodus und Erkennungsmodus können wie folgt beschrieben werden.

### Positioniermodus:

1. Dynamische Darstellung von (Merkmal B), (Merkmal U), (Merkmal Z), (Merkmal M) und (Merkmal I)
2. Benutzer richtet Ausweis aus
3. Automatische Erkennung der korrekten Position durch (Merkmal M) und/oder (Merkmal U)
4. Bei Erkennung der korrekten Position erfolgt eine Information (z.B. durch Audio oder visuell) an den Benutzer. Der Benutzer hält den Ausweis nun ruhig. Umschaltung in den Erkennungsmodus.

### Erkennungsmodus:

1. (Merkmal L) wandert über den Monitor und deckt den gewünschten Reflexionsbereich ab.
2. Optionale Darstellung von (Merkmal B), (Merkmal U), (Merkmal Z), (Merkmal M) und (Merkmal I) im Wechsel mit (Merkmal L) als Rückmeldung an den Benutzer um die Ausweiskarte nicht aus dem Bereich wandern zu lassen.
3. Optionale Erkennung der korrekten Position durch (Merkmal M) und/ oder (Merkmal U) mit Abbruch falls nicht im Toleranzbereich.
4. Automatische oder manuelle Erkennung der Reflexion der/des Sicherheitsmerkmale/ s.
5. Wiederholung mit Start des Positioniermodus falls die Erkennung negativ bewertet wurde.
6. Wiederholung bis alle nötigen Sicherheitsmerkmale erkannt wurden.
7. Abbruch des gesamten Ablaufs bei zu vielen negativen Erkennungen.

Fig. 6 zeigt in einem schematischen Ablaufdiagramm das vorgeschlagene Verfahren zum entfernten Authentisieren eines Benutzers mittels einer Videoschnittstelle, aufweisend ein Bereitstellen 100 mindestens einer Positionierungsanweisung eines Identifikationsdokuments vor einer Kamera an einen Benutzer mittels eines bewegten Bildes, wobei eine Soll-Position und eine Ist-Position des Identifikationsdokuments auf einer Wiedergabevorrichtung angezeigt werden, ein Bereitstellen 101 mindestens einer Bewegungsanweisung des Identifikationsdokuments vor der Kamera, und ein Erfassen 102 vordefinierter Sicherheitsmerkmale des Identifikationsdokuments in Abhängigkeit der mindestens einen Bewegungsanweisung, wenn die Soll-Position und die Ist-Position des Identifikationsdokuments im Wesentlichen übereinstimmen.

Der Fachmann erkennt hierbei, dass die einzelnen Verfahrensschritte iterativ ausgeführt werden können und/ oder Unterschritte aufweisen können.

Die Vorteile der vorgeschlagenen Lösung umfassen u. a., dass ein weiterer Schritt hin zur Vollautomatisierung des Online-Authentisierungsprozesses erfolgt, da die mündliche Anleitung des Benutzers durch eine Person im Callcenter im Optimalfall entfallen kann. Es erfolgt eine Beschleunigung des Authentisierungsprozesses, da keine zeitaufwändige mündliche Kommunikation mehr notwendig ist. Darüber hinaus bestehen keine Verzögerungen, wenn der Benutzer länger als vorgesehen für die Authentisierung braucht, da er eigenständig den Prozess durchführen kann und somit keinerlei weiteres Zutun notwendig ist. Der Authentisierungsprozess wird zudem komfortabler. Der Authentisierungsprozess ist somit für den Benutzer angenehmer, da er keine Anweisungen eines Dritten ausführen muss. Darüber hinaus ist das vorgeschlagene Verfahren weniger fehleranfällig als Verfahren aus dem Stand der Technik.

## Patentansprüche

1. Verfahren zum entfernten Authentisieren eines Benutzers mittels einer Videoschnittstelle, aufweisend:
- Bereitstellen (100) mindestens einer Positionierungsanweisung eines Identifikationsdokuments vor einer Kamera an einen Benutzer mittels eines bewegten Bildes, **dadurch gekennzeichnet, dass** eine Soll-Position und eine Ist-Position des Identifikationsdokuments auf einer Wiedergabevorrichtung angezeigt werden;
- Bereitstellen (101) mindestens einer Bewegungsanweisung des Identifikationsdokuments vor der Kamera; und
- Erfassen (102) vordefinierter Sicherheitsmerkmale des Identifikationsdokuments in Abhängigkeit der mindestens einen Bewegungsanweisung, wenn die Soll-Position und die Ist-Position des Identifikationsdokuments im Wesentlichen übereinstimmen.

2. Verfahren nach Anspruch 1, **dadurch gekennzeichnet, dass** ein gespiegeltes Bild, welches durch die Kamera aufgenommen wird, auf der Wiedergabevorrichtung angezeigt wird.

3. Verfahren nach Anspruch 1 oder 2, **dadurch gekennzeichnet, dass** die Soll-Position und die Ist-Position als Rechtecke auf der Wiedergabevorrichtung angezeigt werden.

4. Verfahren nach einem der vorhergehenden Ansprüche, **dadurch gekennzeichnet, dass** die Soll-Position und die Ist-Position anhand von unterschiedlicher graphischer Information angezeigt werden.

5. Verfahren nach einem der vorhergehenden Ansprüche, **dadurch gekennzeichnet, dass** die Soll-Position und die Ist-Position in unterschiedlichen Farben angezeigt werden.

6. Verfahren nach einem der vorhergehenden Ansprüche, **dadurch gekennzeichnet, dass** auf der Wiedergabevorrichtung ein Muster als Bewegungsanweisung angezeigt wird, welches einer Soll-Spiegelung des Identifikationsdokuments entspricht.

7. Verfahren nach einem der vorhergehenden Ansprüche, **dadurch gekennzeichnet, dass** auf der Wiedergabevorrichtung eine Bewegungsanweisung in Form einer Linie angezeigt wird, um die das Identifikationsdokument zu drehen ist.

8. Verfahren nach einem der vorhergehenden Ansprüche, **dadurch gekennzeichnet, dass** auf der Wiedergabevorrichtung eine Bewegungsanweisung in Form eines Textes, eines bewegten Bildes, eines Symbols und/ oder einer Handlungsanweisung angezeigt wird.

9. Verfahren nach einem der vorhergehenden Ansprüche, **dadurch gekennzeichnet, dass** die mindestens eine Bewegungsanweisung lediglich einen Teil der Wiedergabevorrichtung einnimmt.

10. Verfahren nach einem der vorhergehenden Ansprüche, **dadurch gekennzeichnet, dass** die mindestens eine Bewegungsanweisung kontinuierlich oder wiederholt angezeigt wird.

11. Verfahren nach einem der vorhergehenden Ansprüche, **dadurch gekennzeichnet, dass** die mindestens eine Bewegungsanweisung ein Kippen, ein Drehen, ein Biegen und/ oder ein Verformen des Identifikationsdokuments vorsieht.

12. Verfahren nach einem der vorhergehenden Ansprüche, **dadurch gekennzeichnet, dass** das Verfahren derart iterativ durchgeführt wird, dass mehrere Sicherheitsmerkmale des Identifikationsdokuments erfasst (102) werden.

13. Verfahren nach einem der vorhergehenden Ansprüche, **dadurch gekennzeichnet, dass** bei einem wiederholten Fehlschlagen des Erfassens (102) vordefinierter Sicherheitsmerkmale das Verfahren terminiert.

14. Authentifizierungssystem zum entfernten Authentisieren eines Benutzers mittels einer Videoschnittstelle, aufweisend:
- eine Wiedergabevorrichtung eingerichtet zum Bereitstellen (100) mindestens einer Positionierungsanweisung eines Identifikationsdokuments vor einer Kamera an einen Benutzer mittels eines bewegten Bildes, **dadurch gekennzeichnet, dass** eine Soll-Position und eine Ist-Position des Identifikationsdokuments auf der Wiedergabevorrichtung angezeigt werden;
- eine Schnittstelleneinheit eingerichtet zum Bereitstellen (101) mindestens einer Bewegungsanweisung des Identifikationsdokuments vor der Kamera; und
- eine Bildverarbeitungseinheit eingerichtet zum Erfassen (102) vordefinierter Sicherheitsmerkmale des Identifikationsdokuments in Abhängigkeit der mindestens einen Bewegungsanweisung, wenn die Soll-Position und die Ist-Position des Identifikationsdokuments im Wesentlichen übereinstimmen.

15. Computerprogrammprodukt mit Steuerbefehlen, welche das Verfahren gemäß einem der Ansprüche 1 bis 13 ausführen, wenn sie auf einem Computer zur Ausführung gebracht werden.
